Europäisches Patentamt

European Patent Office

Office européen des brevets

(19)

(11) Publication number: **0 026 016**
**B1**

(12) **EUROPEAN PATENT SPECIFICATION**

(45) Date of publication of patent specification: **13.07.83**

(51) Int. Cl.³: **G 03 B  27/54,** G 03 B  27/62

(21) Application number: **80200857.3**

(22) Date of filing: **11.09.80**

(54) **Reprographic camera.**

(30) Priority: **25.09.79 NL  7907114**

(43) Date of publication of application:
**01.04.81 Bulletin 81/13**

(45) Publication of the grant of the patent:
**13.07.83 Bulletin 83/28**

(84) Designated Contracting States:
**DE FR GB IT NL SE**

(56) References cited:
**CH - A - 107 418**
**DE - A - 2 518 394**
**DE - A - 2 730 494**
**DE - A - 2 734 324**
**US - A - 3 292 485**

(73) Proprietor: **Océ-Nederland B.V.**
**St. Urbanusweg 102**
**NL-5914 CC  Venlo (NL)**

(72) Inventor: **Hagedorn-Olsen, Jens**
**Hornbaek Stationsvej 8**
**3100 Hornbaek (DK)**

(74) Representative: **Bleukx, Lucas Lodewijk Maria, Ir.**
**et al,**
**Océ-Nederland B.V. Patents & Information Dept.**
**Postbus 101**
**NL-5900 MA  Venlo (NL)**

Courier Press, Leamington Spa, England.

## Reprographic camera

The invention relates to a reprographic camera including an optical system comprising an objective, a holder for holding light-sensitive material and an original holder with at least two surfaces onto which an original can be mounted, which original holder can rotate around an axis and be fixed in a plurality of positions in which one mounting surface faces the optical system and is perpendicular to its optical axis.

Reprographic cameras of this kind are known from W. German Patent Specification No. 27304494 and United States Patent Specification No. 3292485.

With reprographic cameras it is usual practice that, whenever the illumination of the light-sensitive material has been completed, the light-sensitive material and the original must always be replaced and the magnification ratio must be adjusted to a different value. This means that the operator has to perform many operations, so that the camera is not used effectively for a long time. To adjust the magnification ratio the known reprographic cameras always require a time-consuming movement of a holder parallel to the optical axis.

The object of the invention is to provide a camera of the kind referred to above, whereby the time elapsing between two succeeding exposures that require extremely different magnification ratios, can be shortened to a considerable extent.

According to the invention this object is attained by making the axis of rotation of the original holder perpendicular to the optical axis and the perpendicular distance between the axis of rotation and a first mounting surface smaller than the perpendicular distance between the axis of rotation and a second mounting surface.

Thus it is achieved that in the operative position of the second mounting surface the optical distance between said second mounting surface and the objective is smaller than the distance between the first mounting surface and the objective when said first mounting surface is in its operative position. As a result the second mounting surface is eminently suitable for originals that have to be magnified very highly.

As transparent originals, in particular, must often be magnified very highly, the invention provides for the second mounting surface to be transparent and a light-source to be arranged behind that surface at the side turned away from the optical system.

The following is a description of an embodiment of a camera according to the invention with reference to the accompanying drawings, in which

Fig. 1 is a schematic side-view of a reprographic camera according to the invention,

Fig. 2 is a top-view of the camera according to Fig. 1, and

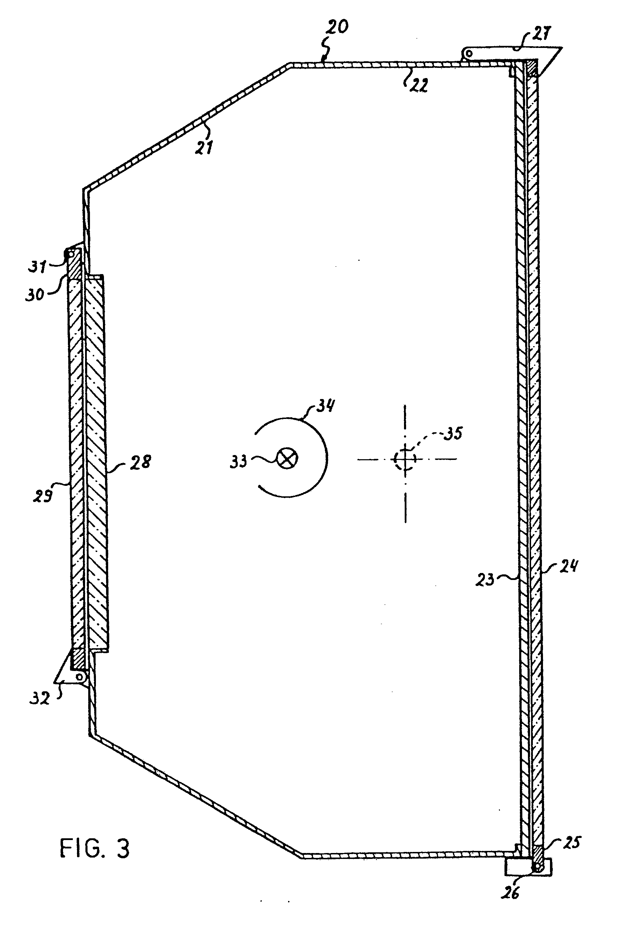

Fig. 3 is a schematic cross section of a holder, applied in the camera represented in Fig. 1 and 2, for holding the original.

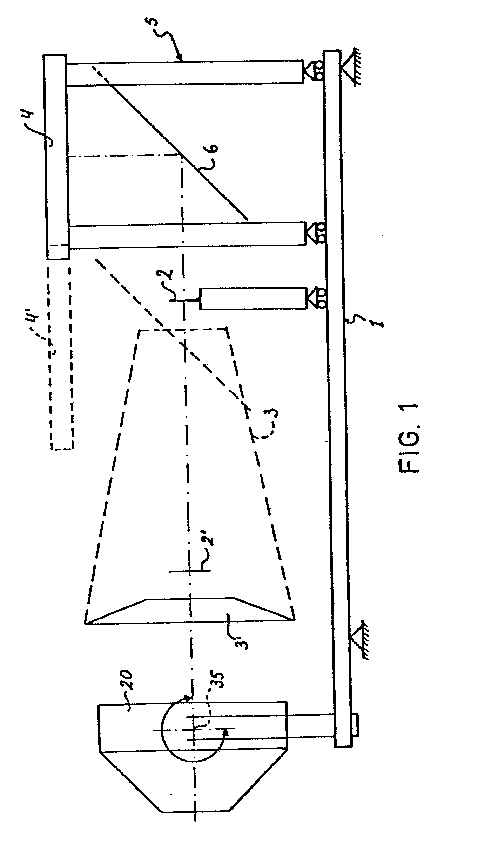

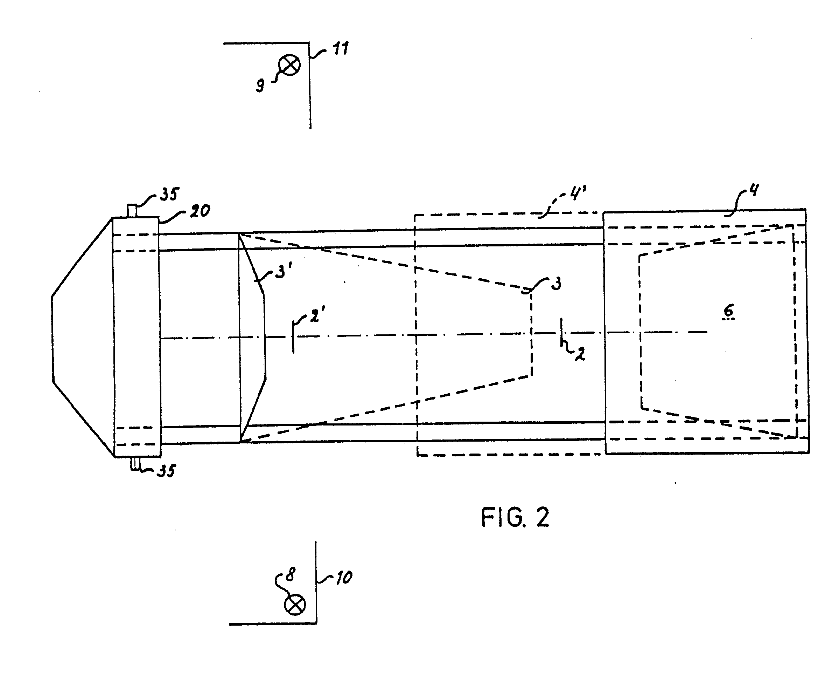

As shown diagrammatically in Fig. 1 and 2, the reprographic camera comprises a frame supporting the functional parts of the camera. These functional parts are the holder 20 for the original, which will be described below in more detail and which, as indicated in Fig. 1, is arranged so that it is capable of rotating through 270 degrees in the frame.

An objective 2 is so mounted on the frame that it can move between two positions referred to by 2 and 2', respectively. A bellows 3 is connected to the objective 2 so as to reduce the amount of scattered light. A holder 4 for holding light-sensitive material is so mounted in the frame that it can be moved via a carriage 5. The holder 4 is horizontal, and in the carriage 5 there is fitted a mirror 6 at an angle of 45 degrees, with which the image of an original being positioned vertically can be projected onto the light-sensitive material held in the holder 4.

Thus it is possible to expose the original either in reflex by means of the lamps 8 and 9, which are arranged in reflectors 10 and 11, or in transmission, as will still be described below.

The arrangement which has been described permits an original with a continuously variable ratio of reproduction to be projected sharply onto the light-sensitive material. Instead of one objective 2, a holder holding various objective may be applied, which objectives can be positioned optionally and dependently on the desired ratio of reproduction in the exposure path.

The holder 20 for the original consists of a box-shaped body with, on the one hand, a part 21 having the shape of a truncated pyramid and, on the other, a part 22 having the shape of a rectangular parallelepiped. On the side of the parallelepiped-shaped part the holder 20 is closed by means of an opaque plate 23. A glass plate 24, caught in a frame 25, is connected with a hinge 26 to the holder 20 for the original and by means of a clamping device 27 the glass plate can be fixed in a position at which it butts against the plate 23. Thus it is possible to place and clamp an original between the plate 23 and glass plate 24, which original, illuminated by the lamps 8 and 9, can be projected onto the light-sensitive material held in the holder 4.

Part 21, which has the shape of a truncated pyramid, is closed by means of a glass plate 28. A glass plate 29, caught in a frame 30, is connected with a hinge 31 to the holder 20 for the original and by means of a clamping device 32 this glass plate can be fixed in a position at which it butts against the glass plate 28. Thus it is possible to insert and clamp an original between the glass plates 28 and 29, which original, illuminated by the lamps 8 and 9, e.g., can be projected onto the light-sensitive material held in the holder 4.

However, it is also possible to expose an original, inserted between the glass plates 28 and 29, in transmission. For that purpose a lamp 33 arranged within a deflector 34 is provided in the holder 20. It is also possible, by switching on the lamps 8, 9 and 33 at the same time, to expose an original, placed between the glass plates 28 and 29, simultaneously in reflex and in transmission.

In order to bring the two mounting surfaces, bounded respectively by the plates 23 and 24 and the plates 28 and 29, into the position suitable for effecting projection, two shaft journals 35 have been fixed to the outer side of the holder 20, which journals can revolve in bushes provided in frame 1. The shaft journals 35 have a common axis, which is perpendicular to the optical axis of the camera and which cuts this optical axis. Furthermore, that axis is parallel to the surfaces bounded by the plates 23 and 28, respectively. The place of the shaft journals 35 has been chosen so that the perpendicular distance between the plate 23 and the axis of the journals 35 is smaller than the perpendicular distance between the plate 28 and the axis of the journals 35. Thus it is achieved that in their operative position the surface bounded by the plates 28 and 29 is spaced more closely to the objective than the surface bounded by the plates 23 and 24, with the result that originals inserted between the plates 28 and 29 can be represented at higher ratios of reproduction.

The holder holding the original is capable of turning around the shaft journals through 270 degrees, so that the two surfaces can alternately be brought into their operative position, i.e. into a position at which either of them faces the objective 2 and is perpendicular to its optical axis. For that purpose, means for fixing the holder 20 holding the original in these two positions can be provided. In addition, by the possibility of turning this holder through 270 degrees it is achieved that the surface bounded by the plates 23 and 24 as well as the surface bounded by the plates 28 and 29 can be positioned horizontally being the top of the holder 20, in which position the fitting of an original between the plates is simplest done. If necessary, means for fixing the holder also in those two positions may be present.

## Claims

1. Reprographic camera including an optical system comprising an objective, a holder for holding light-sensitive material and an original holder (20) with at least two surfaces (23, 28) onto which an original can be mounted, which original holder (20) can rotate around an axis and be fixed in a plurality of positions in which one mounting surface faces the optical system and is perpendicular to its optical axis, characterized in that the axis of rotation of the original holder is perpendicular to the optical axis and the perpendicular distance between the axis of rotation and a first mounting surface (23) is smaller than the perpendicular distance between the axis of rotation and a second mounting surface (28).

2. Reprographic camera according to claim 1, wherein the original holder is provided with two mounting surfaces, characterized in that the mounting surfaces (23, 28) with regard to the axis of rotation are diametrically opposite to each other.

3. Reprographic camera according to claim 1 or 2, characterized in that the second mounting surface (28) is transparent and a light-source (33) is arranged behind that surface at the side turned away from the optical system.

## Patentansprüche

1. Reprographische Kamera mit einem ein Objektiv enthaltenden optischen System, mit einem Halter zur Halterung von lichtempfindlichem Material und mit einem Original-Halter (20) mit mindestens zwei Original-Halterungsflächen (23, 28), welcher Original-Halter (20) um eine Achse drehbar und in einer Mehrzahl von Lagen feststellbar ist, in denen eine Halterungsfläche zu dem optischen System weist und senkrecht zu dessen optischer Achse verläuft, dadurch gekennzeichnet, dass die Drehachse des Original-Halters senkrecht zu der optischen Achse verläuft, und dass der senkrechte Abstand zwischen der Drehachse und einer ersten Halterungsfläche (23) kleiner als der senkrechte Abstand zwischen der Drehachse und einer zweiten Halterungsfläche (28) ist.

2. Reprographische Kamera nach Anspruch 1, bei der der Original-Halter zwei Halterungsflächen aufweist, dadurch gekennzeichnet, dass die Halterungsflächen (23, 28) im Hinblick auf die Drehachse diametral einander gegenüberliegend angeordnet sind.

3. Reprographische Kamera nach Anspruch 1 oder 2, dadurch gekennzeichnet, dass die zweite Halterungsfläche (28) transparent ist, und dass eine Lichtquelle (33) hinter dieser Fläche auf der von dem optischen System abgewandten Seite angeordnet ist.

## Revendications

1. Appareil photographique de reproduction comprenant un système optique qui comporte un objectif, un support pour maintenir une matière photosensible et un support d'original (20) avec au moins deux surfaces (23, 28) sur lesquelles on peut monter un original, ce support d'original (20) pouvant tourner autour d'un axe et être fixé dans un ensemble de positions dans lesquelles une surface de montage fait face au système optique et est perpendicu-

5 6

0 026 016

laire à son axe optique, caractérisé en ce que l'axe de rotation du support d'original est perpendiculaire à l'axe optique et la distance en direction perpendiculaire entre l'axe de rotation et une première surface de montage (23) est inférieure à la distance en direction perpendiculaire entre l'axe de rotation et une seconde surface de montage (28).

2. Appareil photographique de reproduction selon la revendication 1, dans lequel le support d'original comporte deux surfaces de montage, caractérisé en ce que les surfaces de montage (23, 28) sont disposées de façon diamétralement opposée l'une à l'autre, par rapport à l'axe de rotation.

3. Appareil photographique de reproduction selon la revendication 1 ou 2, caractérisé en ce que la seconde surface de montage (28) est transparente et une source de lumière (33) est placée derrière cette surface, du côté opposé au système optique.

FIG. 1

0026016

FIG. 2

FIG. 3